# EUROPÄISCHE PATENTANMELDUNG

(11) **EP 4 030 522 A1**
(43) Veröffentlichungstag der Anmeldung: **20.07.2022**
(21) Anmeldenummer: 21151815.4
(22) Anmeldetag: 15.01.2021
(51) Int. Cl.: H01M 10/0525, H01M 10/42, H01M 50/572, H02J 7/00, H01M 50/213

(54) **BATTERIEMODUL, MODULARES BATTERIESYSTEM UND VERFAHREN ZUR MONTAGE EINES MODULAREN BATTERIESYSTEMS**

(71) Anmelder: VARTA Microbattery GmbH, 73479 Ellwangen Jagst (DE)
(72) Erfinder: Geiss, Matthias, 73485 Unterschneidheim-Zipplingen (DE); Hahn, Rainer, 73489 Jagstzell (DE); Kloos, Dieter, 74579 Fichtenau (DE); Stübler, Roman, 73466 Lauchheim (DE)
(74) Vertreter: Ostertag & Partner Patentanwälte mbB

(57) **Zusammenfassung**

Ein Batteriemodul (10) weist ein Modulgehäuse (11) auf, wobei innerhalb des Modulgehäuses (11) mindestens zwei Batterieblöcke (12, 13) angeordnet sind. Die Batterieblöcke (12, 13) umfassen jeweils mindestens ein, vorzugsweise mindestens zwei Energiespeicherelemente (120, 130) mit jeweils mindestens einer positiven Elektrode und mindestens einer negativen Elektrode. Die mindestens zwei Energiespeicherelemente (120, 130) eines Batterieblocks (12, 13) sind seriell und/oder parallel miteinander verschaltet. Das Batteriemodul (10) ist dadurch gekennzeichnet, dass jeder der Batterieblöcke (12, 13) maximal 60 Volt Gleichspannung liefert. Weiterhin weist das Modulgehäuse (11) mindestens zwei positive Leistungsanschlusskontakte (125, 135) und mindestens zwei negative Leistungsanschlusskontakte (126, 136) auf, die den Batterieblöcken (12, 13) zugeordnet sind, damit die von den Batterieblöcken (12, 13) gelieferten Gleichspannungen von außerhalb des Modulgehäuses (11) abgreifbar sind. Die zwischen einem positiven und einem negativen Leistungsanschlusskontakt abgreifbare Gleichspannung beträgt maximal 60 Volt.

## Beschreibung

Die vorliegende Erfindung betrifft ein Batteriemodul mit einem Modulgehäuse, in dem mindestens zwei Batterieblöcke angeordnet sind. Das Batteriemodul ist insbesondere für den Aufbau eines Hochvoltbatteriesystems geeignet. Weiterhin betrifft die Erfindung ein modulares Batteriesystem, insbesondere ein modulares Hochvoltbatteriesystem, sowie ein Verfahren zur Montage eines solchen modularen Batteriesystems.

### ANWENDUNGSGEBIET UND STAND DER TECHNIK

Bei Batteriemodulen handelt es sich in der Regel um wieder aufladbare, elektrische Energiespeicher, die beispielsweise in automobilen Anwendungen oder in stationären Energiespeichersystemen eingesetzt werden können. In einem Batteriemodul werden im Allgemeinen mehrere Energiespeicherzellen zusammengeschaltet, um so die für die jeweilige Anwendung erforderlichen Ströme und Spannungen bereitstellen zu können. Es kann dabei auch vorgesehen sein, die einzelnen Energiespeicherzellen innerhalb des Batteriemoduls in zwei oder mehr Batterieblöcken zusammenzufassen.

Beispielsweise beschreibt die WO 2017/063858 A1 ein Zellmodul zur Speicherung elektrischer Energie, bei dem im Innenraum eines Modulgehäuses zwei oder mehr Zellen mit jeweils mindestens einer positiven und mindestens einer negativen Elektrode angeordnet sind. Das Modulgehäuse weist dabei mindestens drei externe elektrische Anschlusspole auf.

Bei vergleichsweise großen Batteriemodulen, die zur Speicherung von Energien beispielsweise im KWh-Bereich vorgesehen sind, wird eine Vielzahl von Energiespeicherzellen seriell und/oder parallel miteinander verschaltet. Für Fahrzeugbatterien und Energiespeichersysteme mit hohem Energiegehalt ist es zweckmäßig, einzelne Batteriemodule zu sogenannten Hochvolt-Stapeln zu verschalten, um so ein modulares Batteriesystem zu bilden. Bei höheren Spannungen können die Leitungsquerschnitte kleiner dimensioniert werden. Weiterhin kann in der Regel die nachgeschaltete Leistungselektronik mit einem Hochvoltsystem effizienter arbeiten. So kann beispielsweise ein einem Wechselrichter vorgeschalteter DC/DC-Wandler eingespart werden. Insgesamt bringen daher Hochvoltbatteriesysteme in großen Leistungsbereichen verschiedene technische und ökonomische Vorteile.

Ein bekanntes Problem bei Batteriemodulen und modularen Batteriesystemen insbesondere im Hochvoltbereich ist die Gefahr, die von einem ungewollten Kontaktieren entgegengesetzter Pole der Systeme ausgeht. Im Allgemeinen wird eine Berührungsspannung ≥ 60 V Gleichstrom als kritisch angesehen, so dass der Bereich unterhalb von 60 V Gleichstrom als Niedervoltbereich und der Bereich oberhalb von 60 V Gleichstrom als Hochvoltbereich definiert wird. Im Hochvoltbereich müssen im Allgemeinen besondere Maßnahmen vorgesehen sein, um einen Berührungsschutz zu gewährleisten. Insbesondere sind im Hochvoltbereich für die Handhabung und Nutzung von entsprechenden Elementen besondere Isolations- und Schutzmaßnahmen vorzusehen. Dabei müssen im Hochvoltbereich spannungsführende Teile eines Batteriemoduls oder Batteriesystems ständig gegen Berühren gesichert sein. Dies gilt auch für die Lagerung und den Transport sowie während und auch nach der Nutzung, also auch im Bereich der Entsorgung. Darüber hinaus wird das Recycling durch potenziell unter hoher Spannung stehende, gealterte Batteriemodule im Hochvoltbereich erschwert. Mit Hochvoltsystemen ist daher ein erhöhter technischer Aufwand verbunden. Die dadurch aufwendigere Installation derartiger Batteriemodule oder Batteriesysteme geht mit erhöhten Kosten einher und der Installateur muss mit spezieller Schutzausrüstung arbeiten.

### AUFGABE UND LÖSUNG

Vor diesem Hintergrund stellt sich die Erfindung die Aufgabe, ein Batteriemodul und ein modulares Batteriesystem bereitzustellen, bei denen im nicht installierten Zustand keine berührungsgefährlichen Spannungen auftreten und die dennoch unter anderem für einen Einsatz in Hochvoltsystemen ohne Weiteres geeignet sind. Darüber hinaus sollen die Batteriemodule auch für einen Einsatz im Niedervoltbereich geeignet sein.

Diese Aufgabe wird durch ein Batteriemodul und durch ein modulares Batteriesystem gelöst, wie sie sich aus den Ansprüchen 1 und 8 ergeben. Weiterhin wird die Aufgabe durch ein Verfahren zur Montage eines Batteriesystems gelöst, das Gegenstand des Anspruchs 14 ist. Bevorzugte Ausgestaltungen des Batteriemoduls und des modularen Batteriesystems sowie des Verfahrens zur Montage des Batteriesystems ergeben sich aus den abhängigen Ansprüchen.

Das erfindungsgemäße Batteriemodul zeichnet sich zunächst durch die folgenden Merkmale aus:
a. Das Batteriemodul weist ein Modulgehäuse auf; und
b. innerhalb des Modulgehäuses sind mindestens zwei Batterieblöcke angeordnet; und
c. die Batterieblöcke umfassen jeweils mindestens ein, vorzugsweise mindestens zwei Energiespeicherelemente mit jeweils mindestens einer positiven Elektrode und mindestens einer negativen Elektrode; und
d. die mindestens zwei Energiespeicherelemente eines Batterieblocks sind seriell und/oder parallel miteinander verschaltet.

Besonders zeichnet sich das Batteriemodul durch die folgenden Merkmale e. bis g. aus:
e. Jeder der Batterieblöcke liefert maximal 60 Volt Gleichspannung; und
f. das Modulgehäuse weist mindestens zwei positive Leistungsanschlusskontakte und mindestens zwei negative Leistungsanschlusskontakte auf, die den Batterieblöcken zugeordnet sind, damit die von den Batterieblöcken gelieferten Gleichspannungen von außerhalb des Modulgehäuses abgreifbar sind; und
g. die zwischen einem positiven und einem negativen Leistungsanschlusskontakt abgreifbare Gleichspannung beträgt maximal 60 Volt.

Das Konzept der Erfindung besteht darin, dass innerhalb des Modulgehäuses idealerweise keine Spannungen > 60 V auftreten und insbesondere auch keine Spannungen > 60 V durch Verbindung von nur zwei Leistungsanschlusskontakten abgreifbar sind. Dies ist dadurch realisiert, dass die Maximalspannung der Batterieblöcke begrenzt ist. Über zwei einem einzelnen Batterieblock zugeordnete Anschlusskontakte kann also keine Spannung > 60 V abgegriffen werden.

Ausführungsformen, bei denen zwei oder mehr der Batterieblöcke innerhalb des Modulgehäuses elektrisch miteinander verschaltet sind, wobei den miteinander verschalteten Batterieblöcken ein gemeinsamer positiver und ein gemeinsamer negativer Leistungsanschlusskontakt zugeordnet ist, sind von der Erfindung gleichfalls umfasst. Da die erfindungsgemäß zwischen dem gemeinsamen positiven und dem gemeinsamen negativen Leistungsanschlusskontakt abgreifbare Gleichspannung in keinem Fall 60 Volt übersteigen darf, ist in diesem Fall darauf zu achten, dass sich aus der Verschaltung der Batterieblöcke keine derartige an den Leistungsanschlusskontakten anliegende Spannung ergibt, beispielsweise durch eine geeignete Auswahl der Anzahl oder der Nennspannungen der einzelnen Batterieblöcke. Liefern die einzelnen Batterieblöcke beispielsweise jeweils eine Spannung von 18 V, so sollten nicht mehr als drei dieser Blöcke seriell miteinander verschaltet werden. Somit kann im Ergebnis an den von außen zugänglichen Leistungsanschlusskontakten keine berührungsgefährliche Spannung auftreten.

Sehr wohl ist es aber möglich, bei entsprechenden Leistungen der Batterieblöcke durch externe elektrische Verschaltung der Leistungsanschlusskontakte Spannungen > 60 V bereitzustellen. Die versehentliche gleichzeitige Kontaktierung von mehr als zwei Leistungsanschlusskontakten ist nahezu ausgeschlossen, so dass das erfindungsgemäße Batteriemodul sehr sicher in der Handhabung ist.

Im einfachsten Fall weist das Batteriemodul je Batterieblock genau einen positiven und einen negativen Leistungsanschlusskontakt auf. Ein Batteriemodul mit zwei Batterieblöcken würde in diesem Fall also insgesamt vier externe Leistungsanschlusskontakte aufweisen, jeweils zwei pro Block.

Die Batterieblöcke sind bevorzugt durch elektrische Leiter innerhalb des Modulgehäuses mit den ihnen zugeordneten Leistungsanschlusskontakten verbunden.

Es ist besonders bevorzugt, dass die von dem Batteriemodul umfassten Batterieblöcke, wenn man sie in Reihe schaltet, insgesamt eine Spannung > 60 V liefern. Erfindungsgemäß ist eine solche Verschaltung aber ausschließlich durch eine elektrische Verbindung der Leistungsanschlusskontakte des Batteriemoduls möglich.

Das erfindungsgemäße Batteriemodul bietet die Möglichkeit der flexiblen Verschaltung seiner Batterieblöcke. Es kann einzeln oder in Zusammenschaltung mit weiteren Batteriemodulen, insbesondere weiteren erfindungsgemäßen Batteriemodulen, sowohl in Niedervoltsystemen als auch in Hochvoltsystemen verbaut werden. Dabei vereint das erfindungsgemäße Batteriemodul sicherheitstechnische Vorteile, da von dem Batteriemodul vor dessen Montage keine berührungsgefährlichen Spannungen ausgehen können. Dennoch kann das erfindungsgemäße Batteriemodul zur Erzeugung von hohen Batteriespannungen bei einzelnen Batteriemodulen oder auch insgesamt in einem modularen Batteriesystem eingesetzt werden, wobei solche hohen Batteriespannungen aus ökonomisch-technischen Gründen, wie eingangs erläutert, oftmals sehr vorteilhaft sind.

Ein Batterieblock im Sinne der vorliegenden Erfindung zeichnet sich dadurch aus, dass er eine Mehrzahl von Energiespeicherelementen umfasst, die elektrisch miteinander verschaltet sind um die Maximalspannung von 60 Volt Gleichstrom zu erreichen. Von den Energiespeicherelementen eines anderen Batterieblocks sind die Energiespeicherelemente elektrisch und gegebenenfalls auch räumlich getrennt. Eine elektrische Verbindung kann nur über die Leistungsanschlusskontakte gebildet werden. Vorzugsweise sind die elektrisch miteinanderverschalteten Energiespeicherelemente eines Batterieblocks von Energiespeicherelementen eines anderen Batterieblocks elektrisch isoliert. Dies kann insbesondere durch eine räumliche Entkopplung, die beispielsweise einen Luftspalt realisiert, und/oder durch ein Isoliermaterial, beispielsweise eine Kunststoffplatte oder ähnliches, bewirkt sein.

Vorzugsweise umfassen die Batterieblöcke jeweils eine Halterungfür die von ihnen umfassten Energiespeicherelemente auf. In einigen Ausführungsformen können sie auch ein eigenes Gehäuse umfassen, das die Energiespeicherelemente umschließt. Es ist bevorzugt, dass jeder Batterieblock einen positiven Ausgangspol und einen negativen Ausgangspol aufweist und dass auf die von ihm umfassten Energiespeicherelemente ausschließlich über diese Ausgangspole zugegriffen werden kann.

Bevorzugt sind die Batterieblöcke innerhalb des Gehäuses räumlich voneinander beabstandet. Zusätzlich oder alternativ können die Batterieblöcke elektrisch voneinander isoliert sein. Hierfür können gegebenenfalls zusätzliche Einrichtungen zur gehäuseinternen Isolierung der einzelnen Batterieblöcke vorgesehen sein, wie z. B. das bereits erwähnte Isoliermaterial.

Prinzipiell ist es möglich, dass zwei oder gegebenenfalls mehrere Batterieblöcke innerhalb einer gemeinsamen Halterung für alle Energiespeicherzellen realisiert werden, indem die Energiespeicherzellen eines Blocks entsprechend elektrisch miteinander verschaltet sind. In dieser Ausführungsform sind also zwei oder mehr Batterieblöcke innerhalb einer räumlichen Einheit vorgesehen.

In bevorzugter Weise ist esjedoch vorgesehen, dass jeder Batterieblock eine räumliche Einheit bildet. Besonders bevorzugt weist jeder Batterieblock eine eigene Halterung für die Energiespeicherelemente des jeweiligen Batterieblocks auf. Bevorzugt sind die einzelnen Batterieblöcke innerhalb des Gehäuses des Batteriemoduls räumlich voneinander getrennt, so dass hierdurch innerhalb des Batteriemoduls in besonders einfacher Weise eine elektrische Isolierung der Batterieblöcke untereinander realisiert ist.

Jedes elektrochemisches Energiespeicherelement im Sinne der vorliegenden Anmeldung umfasst mindestens eine elektrochemische, zur Speicherung elektrischer Energie befähigte Zelle, bevorzugt genau eine elektrochemische, zur Speicherung elektrischer Energie befähigte Zelle. Im Falle mehrere Zellen können diese seriell und/oder parallel miteinander verschaltet sein. Bevorzugt umfassen die in einem erfindungsgemäßen Batteriemodul eingesetzten Energiespeicherelemente jeweils ein eigenes Gehäuse, beispielsweise ein Foliengehäuse oder ein metallisches Gehäuse, in dem die mindestens eine elektrochemische Zelle angeordnet ist.

Elektrochemische Energiespeicherzellen umfassen stets mindestens eine positive und mindestens eine negative Elektrode, welche durch einen Separator voneinander getrennt sind. Beim Betrieb elektrochemischer Zellen findet eine elektrochemische, energieliefernde Reaktion statt, welche sich auszwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zelle. Dieser lonenstrom durchquert den Separator und wird meist durch einen flüssigen Elektrolyten gewährleistet.

In sekundären (wieder aufladbaren) elektrochemischen Energiespeicherzellen, die bei der vorliegenden Erfindung in besonders bevorzugter Weise zum Einsatz kommen, ist diese Entladereaktion reversibel, es besteht also die Möglichkeit, die bei der Entladung erfolgte Umwandlung chemischer Energie in elektrische Energie umzukehren.

Innerhalb der Batterieblöcke des erfindungsgemäßen Batteriemoduls können die einzelnen Energiespeicherelemente in Abhängigkeit der jeweiligen Anforderungen prinzipiell in beliebiger Weise miteinanderverschaltetsein, also insbesondere seriell und/oder parallel, allerdings immer unter der Maßgabe, dass durch die Verschaltung die o.g. Maximalspannungen nicht überschritten werden.

Bei einer Installation des erfindungsgemäßen Batteriemoduls oder gegebenenfalls der Installation eines modularen Batteriesystems unter Verwendung erfindungsgemäßer Batteriemodule können die Leistungsanschlusskontakte miteinander verschaltet werden, so dass die gewünschten Spannungen, beispielsweise im Niedervoltbereich, aber auch mit besonderem Vorteil im Hochvoltbereich, zur Verfügung gestellt werden können.

Das erfindungsgemäße Batteriemodul bietet erhebliche Vorteile bei der Produktion, Bereitstellung, dem Transport und der Installation des Batteriemoduls oder gegebenenfalls eines modularen Batteriesystems unter Verwendung der erfindungsgemäßen Batteriemodule, da vor der letztendlichen Installation keine kritischen Berührungsspannungen auftreten können. Fürden Installateur sind daher keine aufwendigen Maßnahmen, wie beispielsweise eine spezielle Schutzausrüstung und andere Vorsichtsvorkehrungen, für das Arbeiten unter hoher Spannung erforderlich. Weiterhin sind keine technischen Maßnahmen erforderlich, die für einen Berührungsschutz bei Hochvoltsystemen üblicherweise vorgesehen werden müssen. Damit ist zum einen das Arbeiten im Hinblick auf die Installation der Batteriemodule oder der entsprechenden modularen Batteriesysteme wesentlich einfacher und sicherer durchführbar. Zum anderen können durch den Verzicht auf technische Hochspannungs-Schutzmaßnahmen erhebliche Kosten eingespart werden.

Die Leistungsanschlusskontakte können insbesondere durch metallische Bauteile realisiert werden. Die Leistungsanschlusskontakte können dabei beispielsweise als Polbolzen ausgebildet sein, an die die zu den jeweiligen Batterieblöcken führenden elektrischen Leiter angeschweißt, angelötet oder auf sonstige Weise elektrisch angekoppelt sind. Umfasst das Modulgehäuse metallische Komponenten, so kann es vorgesehen sein, entsprechende Poldurchführungen vorzusehen, um die Leistungsanschlusskontakte gegen das Gehäuse elektrisch zu isolieren. Derartige technische Maßnahmen sind dem Fachmann bekannt und benötigen keiner weiteren Erläuterung.

Bei der Installation können die Leistungsanschlusskontakte der erfindungsgemäßen Batteriemodule in unterschiedlicher Weise verschaltet werden. Beispielsweise können damit die Batterieblöcken eines Batteriemoduls seriell und/oder parallel miteinander verschaltet werden. Insbesondere ist es aber auch möglich, die Leistungsanschlusskontakte eines Batteriemoduls elektrisch mit den Leistungsanschlusskontakten eines anderen Batteriemoduls zu verbinden, wodurch es möglich ist, zu unterschiedlichen Batteriemodulen gehörige Batterieblöcke seriell und/oder parallel miteinanderzu verschalten. Das erfindungsgemäße Batteriemodul istdahersehrflexibel einsetzbar und kann gewissermaßen als universeller Baustein für verschiedenste Anwendungen im Niedervoltbereich und im Hochvoltbereich eingesetzt werden.

Insgesamt ergeben sich zahlreiche Möglichkeiten für die Verschaltung der Leistungsanschlusskontakte. Für Niederspannungsanwendungen sind beispielsweise oftmals parallele Konfigurationen bei der Verschaltung der Leistungsanschlusskontakte von Interesse, wodurch eine Erhöhung der Kapazität erreicht wird. Für Hochspannungsanwendungen kommen vor allem serielle Konfigurationen bei der Verschaltung der Leistungsanschlusskontakte zur Erhöhung der Spannung zum Einsatz. Es können auch Kombinationen von seriellen und parallelen Verschaltungen vorteilhaft sein. Weiterhin sind auch Verschaltungen mit externen Quellen, Senken oder anderen Batteriesystemen, auch unabhängig voneinander, möglich.

In besonders bevorzugter Weise zeichnet sich das erfindungsgemäße Batteriemodul durch mindestens eines der folgenden zusätzlichen Merkmale aus:
a. Das Modulgehäuse ist bevorzugt prismatisch ausgebildet;
b. die elektrischen Leistungsanschlusskontakte des Modulgehäuses befinden sich auf mindestens zwei Seiten des Modulgehäuses, insbesondere auf gegenüberliegenden Seiten des Modulgehäuses;
c. pro Batterieblock weist das Modulgehäuse einen positiven und einen negativen elektrischen Leistungsanschlusskontakt auf, von denen sich einer auf einer der Seiten und der andere auf einer anderen der Seiten des Modulgehäuses, insbesondere auf gegenüberliegenden Seiten des Modulgehäuses, befinden.

Bevorzugt sind die vorgenannten Merkmale a. und b., in einigen Ausführungsformen auch die vorgenannten Merkmale a., b. und c., in Kombination miteinander verwirklicht.

Die prismatische Ausgestaltung des Modulgehäuses ist besonders vorteilhaft, da dadurch ein sehr flexibel einsetzbares Batteriemodul bereitgestellt werden kann. Die prismatische Form ist in Bezug auf die Raumausnutzung sehr günstig und kann mit besonderem Vorteil beispielsweise in gestapelter Anordnung von mehreren Batteriemodulen eingesetzt werden. Zudem sind prismatische Formen, insbesondere kubische oderquaderförmige Formen, bei Batteriemodulen bereits weitverbreitet, so dass das erfindungsgemäße Batteriemodul im Hinblick auf die geometrischen Gegebenheiten mit herkömmlichen Batteriemodulen kompatibel ist.

Insbesondere bei gestapelten Anordnungen der erfindungsgemäßen Batteriemodule ist die Anordnung der elektrischen Leistungsanschlusskontakte des Modulgehäuses auf verschiedenen, insbesondere gegenüberliegenden Seiten des Modulgehäuses sehr vorteilhaft, da dadurch die Verbindung verschiedener Leistungsanschlusskontakte der verschiedenen Batteriemodule sehr einfach und praktikabel ist. Dabei sind insbesondere zwei prinzipielle Ausgestaltungsmöglichkeiten besonders vorteilhaft.

In einer ersten Ausgestaltungsmöglichkeit umfasst das Modulgehäuse eine Seite, auf der alle negativen Leistungsanschlusskontakte angeordnet sind, sowie eine weitere Seite, vorzugsweise eine gegenüberliegende Seite des Modulgehäuses, auf der alle positiven Leistungsanschlusskontakte angeordnet sind.

In einer anderen prinzipiellen Ausgestaltungsmöglichkeit umfasst das Modulgehäuse eine Seite, auf der ein Teil der negativen Leistungsanschlusskontakte und ein Teil der positiven Leistungsanschlusskontakte angeordnet sind. Auf einer weiteren Seite, vorzugsweise einer gegenüberliegenden Seite des Modulgehäuses, sind alle weiteren positiven Leistungsanschlusskontakte und alle weiteren negativen Leistungsanschlusskontakte angeordnet. Hierbei kann es vorzugsweise vorgesehen sein, dass die positiven und die negativen Leistungsanschlusskontakte auf den jeweiligen Seiten in alternierender Abfolge angeordnet sind. Insbesondere regelmäßige Abfolgen unter Ausbildung eines Musters können bevorzugt sein. Es sind jedoch auch andere Anordnungsmöglichkeiten der positiven und der negativen Leistungsanschlusskontakte auf den jeweiligen Seiten möglich, beispielsweise können in einem bestimmten Bereich der jeweiligen Seite alle positiven oder alle negativen Leistungsanschlusskontakte dieser Seite und in einem anderen bestimmten Bereich die jeweils anderen Leistungsanschlusskontakte zusammengefasst sein.

Je nachdem, auf welcher Seite des Modulgehäuses die positiven bzw. die negativen Leistungsanschlusskontakte angeordnet sind, kann die Orientierung des jeweiligen Batterieblocks oder des Verbunds von Batterieblöcken im Inneren des Modulgehäuses, dem diese Leistungsanschlusskontakte zugeordnet sind, entsprechend ausgerichtet sein. So kann es beispielsweise vorgesehen sein, dass bei der Ausführungsform, bei dersich alle negativen Leistungsanschlusskontakte auf einer Seite und alle positiven Leistungsanschlusskontakte auf einer gegenüberliegenden Seite des Modulgehäuses befinden, die jeweiligen Batterieblöcke bzw. Verbünde von Batterieblöcken mit paralleler Polarität nebeneinander innerhalb des Batteriegehäuses angeordnet sind. Bei der Ausführungsform, bei der sich den jeweiligen Seiten, insbesondere den gegenüberliegenden Seiten des Batteriemoduls, sowohl positive als auch negative Leistungsanschlusskontakte befinden, kann es zweckmäßigerweise vorgesehen sein, dass die einzelnen Batterieblöcke bzw. Verbünde von Batterieblöcken, denen die jeweiligen Leistungsanschlusskontakte zugeordnet sind, in antiparalleler Polarität nebeneinander angeordnet sind. Diese Ausführungsformen haben den besonderen Vorteil, dass die Wege zwischen den jeweiligen Polen der Batterieblöcke bzw. der Verbünde von Batterieblöcken zu den Leistungsanschlusskontakten auf der Außenseite des Modulgehäuses kurz sind, wodurch sich Vorteile bei der Fertigung und im Materialverbrauch und der Robustheit der Batteriemodule ergeben.

Die Ausführungsform des erfindungsgemäßen Batteriemoduls, bei der sich auf einer Seite des Batteriemoduls alle positiven Leistungsanschlusskontakte und auf einer anderen, vorzugsweise der gegenüberliegenden Seite, alle negativen Leistungsanschlusskontakte befinden, eignet sich vor allem für eine parallele Verschaltung der Batterieblöcke bzw. der Verbünde der Batterieblöcke. Hierbei können die Batterieblöcke oder Verbünde von Batterieblöcken, die sich innerhalb eines Batteriemoduls befinden, miteinander parallel verschaltet werden oder die Batterieblöcke oder Verbünde von Batterieblöcken unterschiedlicher Batteriemodule können miteinander parallel verschaltet werden, wobei auch Kombinationen möglich sind.

Prinzipiell ist bei dieser Ausführungsform, bei der sich auf einer Seite des Batteriemoduls alle positiven Leistungsanschlusskontakte und auf einer anderen, vorzugsweise der gegenüberliegenden Seite, alle negativen Leistungsanschlusskontakte befinden, auch eine Reihenschaltung bzw. eine serielle Verschaltung möglich, wobei hierbei die Verbindungstechnik gegebenenfalls etwas aufwendiger ist.

Die Ausführungsform des erfindungsgemäßen Batteriemoduls, bei der die positiven und die negativen Leistungsanschlusskontakte gewissermaßen gemischt auf den sich vorzugsweise gegenüberliegenden Seiten des Modulgehäuses befinden, eignet sich in besonderer Weise für eine serielle Verschaltung der Batterieblöcke oder der Verbünde von Batterieblöcken. Hierbei können sowohl die Batterieblöcke oder Verbünde von Batterieblöcken innerhalb eines Batteriemoduls als auch die Batterieblöcke oder Verbünde von Batterieblöcken von verschiedenen Batteriemodulen bei der Installation seriell miteinander verschaltet werden.

Derartige Verschaltungen der positiven und negativen elektrischen Leistungsanschlusskontakte der Batteriemodule sind insbesondere bei einer Stapelung der Batteriemodule, die für diese Anwendungen vorzugsweise quaderförmig ausgestaltet sind, besonders vorteilhaft, da hier die Wege für die Verschaltungen sehr kurz sind, so dass die Verbindungstechnik einfach und praktikabel ist.

Die elektrischen Leistungsanschlusskontakte können beispielsweise als männlicher oder weiblicher Teil einer Steckverbindung ausgebildet sein. Beispielsweise können alle negativen Leistungsanschlusskontakte männlich und alle positiven Leistungsanschlusskontakte weiblich ausgebildet sein. In einer weiteren Ausführungsform können alle Leistungsanschlusskontakte auf einer Seite des Modulgehäuses männlich und alle Leistungsanschlusskontakte auf einer Seite des Modulgehäuses weiblich sein.

In einer besonders bevorzugten Ausführungsform des erfindungsgemäßen Batteriemoduls zeichnet sich das Batteriemodul entsprechend durch das folgende zusätzliche Merkmal aus:
a. Die elektrischen Leistungsanschlusskontakte auf der einen Seite des Modulgehäuses sind als männlicher Teil und die elektrischen Leistungsanschlusskontakte auf der anderen Seite, insbesondere auf der gegenüberliegenden Seite, des Modulgehäuses sind als weiblicher Teil einer Steckverbindung ausgebildet.

Durch diese Ausgestaltung wird die Verbindungstechnik für den Installateur weiter vereinfacht.

Es ist natürlich auch möglich, alle Leistungsanschlusskontakte weiblich auszubilden, und die Leistungsanschlusskontakte benachbarter Batteriemodule mittels zweifach männlicherSteckverbinder miteinander zu verbinden. Umgekehrt auch möglich, alle Leistungsanschlusskontakte männlich auszubilden, und die Leistungsanschlusskontakte benachbarter Batteriemodule mittels zweifach weiblicher Steckverbinder miteinander zu verbinden.

Die Ausgestaltung der Leistungsanschlusskontakte kann unabhängig davon erfolgen, ob sich auf der jeweiligen Seite des Modulgehäuses ausschließlich positive oder ausschließlich negative Leistungsanschlusskontakte oder sowohl positive als auch negative Leistungsanschlusskontakte befinden. Durch entsprechende Ausführung der jeweiligen Leistungsanschlusskontakte in entsprechender Verteilung auf den Seiten des Modulgehäuses können so sehr einfach zusammensteckbare Batteriemodule für Stapelanordnungen bereitgestellt werden, die in einfacherWeise für die Verschaltung zusammengesteckt werden können, ohne dass aufwendige Verbindungen einzelner Kontakte notwendigwären.

Das Modulgehäuse selbst kann aus verschiedenen Materialien gebildet sein. Beispielsweise eignet sich Kunststoff aufgrund seiner isolierenden Eigenschaften und seines geringen Gewichtes und der einfachen Verarbeitbarkeit hierfür. In anderen Ausgestaltungen können metallische Gehäuse vorgesehen sein, beispielsweise aus Aluminiumguss, oder Kant-Biege-Gehäuse aus entsprechenden Blechen. Weiterhin sind auch Kombinationen von Materialien, sogenannte Hybridgehäuse, möglich. Gehäuse aus Metall können unter Umständen bevorzugt sein, da metallische Gehäuse wärmeableitende Eigenschaften aufweisen. Eine Kühlung kann beispielsweise durch die Vermittlung von wärmeleitenden Materialien realisiert werden, deren Kühlwirkung an das Gehäuse abgeleitet wird.

Wie oben bereits erwähnt, ist es bei Modulgehäusen aus Metall meist erforderlich, zumindest die elektrisch leitenden Komponenten der Leistungsanschlusskontakte elektrisch vom Modulgehäuse zu isolieren.

In einer besonders bevorzugten Ausgestaltung des erfindungsgemäßen Batteriemoduls zeichnet sich das Batteriemodul durch mindestens eines der folgenden zusätzlichen Merkmale aus:
a. Die Energiespeicherelemente eines Batterieblocks sind zylindrische Rundzellen;
b. die Energiespeicherelemente eines Batterieblocks werden von einer Halterung, insbesondere einer Halterung aus Kunststoff, gehalten.

Vorzugsweise sind die beiden vorgenannten Merkmale a. und b. in Kombination miteinander realisiert.

Zylindrische Rundzellen weisen im Allgemeinen eine kreisförmige Grundfläche auf. Gegenüber Knopfzellen, die ebenfalls eine kreisförmige Grundfläche aufweisen, zeichnen sich zylindrische Rundzellen dadurch aus, dass ihre Höhe im Allgemeinen größer als ihr Durchmesser ist. Zylindrische Rundzellen sind als Energiespeicherelemente für die Batterieblöcke des erfindungsgemäßen Batteriemoduls besonders geeignet, da sie auf der einen Seite in der Lage sind, die erforderlichen Spannungen bereitzustellen. Auf der anderen Seite bieten sie durch ihre Form den Vorteil einer besonders praktikablen Kühlung, wenn sie zu Batterieblöcken zusammengefasst werden, da zwischen den einzelnen zylindrischen Rundzellen zwangsläufig Hohlräume entstehen, die für eine Kühlung oder allgemein einen Temperaturaustausch günstig sind. In anderen Ausführungsformen kann es auch vorgesehen sein, dass prismatisch geformte Energiespeicherelemente für die Batterieblöcke eingesetzt werden. Je nach den jeweiligen Erfordernissen können gegebenenfalls weitere Vorkehrungen für eine Kühlung der Energiespeicherelemente getroffen werden.

Innerhalb eines Batterieblocks sind die Energiespeicherelemente vorzugsweise in mehreren parallelen Reihen angeordnet. Im Fall von zylindrischen Rundzellen sind diese parallel entlang ihrer Längsachsen ausgerichtet. So können beispielsweise 12 Reihen mit jeweils 14 nebeneinander angeordneten zylindrischen Rundzellen zusammengefasst werden und beispielsweise von einer Halterung aus Kunststoff gerahmt werden.

Die Halterung kann über entsprechende elektrische Leiter und Kontakte verfügen, um eine gewünschte elektrische Verschaltung der einzelnen Energiespeicherelemente innerhalb des Zellblocks zu realisieren.

Innerhalb des Zellblocks können die Energiespeicherzellen und insbesondere die Rundzellen ein regelmäßiges Muster in einer oder gegebenenfalls mehreren Ebenen bilden, wobei die Energiespeicherzellen und insbesondere Rundzellen vorzugsweise mit kleinstmöglichem Abstand zueinander angeordnet sind.

Besonders bevorzugt verfügt jeder Zellblock über einen positiven und einen negativen elektrischen Anschlusspol, der bevorzugt auch Teil der Halterung sein kann. Zur elektrischen Anbindung der Batterieblöcke können diese Anschlusspole mit den dazu korrespondierenden Leistungsanschlusskontakten verbunden werden.

Bei den Energiespeicherelementen handelt es sich vorzugsweise um Lithium-Ionen-Zellen. Die Elektroden von Lithium-Ionenzellen können bekanntermaßen Lithium-Ionen reversibel aufnehmen und wieder abgeben.

Im Allgemeinen ist es bevorzugt, dass in den einzelnen Batterieblöcken jeweils Energiespeicherelemente verwendet werden, die alle den gleichen Aufbau aufweisen. Prinzipiell ist es jedoch auch möglich, dass unterschiedliche Energiespeicherelemente innerhalb der Batterieblöcke verwendet werden.

Das Batteriemodul kann beispielsweise zwei Batterieblöcke umfassen, die jeweils eine Gleichspannung von ca. 50 V bereitstellen. Jeder Batterieblock umfasst dabei eine Mehrzahl von Energiespeicherelementen, insbesondere von zylindrischen Lithium-Ionen-Rundzellen. Es können beispielsweise zylindrische Rundzellen mit einer Abschaltspannung von 4,2 V pro Einzelzelle verwendet werden. Diese zylindrischen Rundzellen können beispielsweise in Reihen zu je 14 Rundzellen angeordnet sein, wobei beispielsweise 12 solcher Reihen vorgesehen sind. Die Energiespeicherelemente innerhalb dieses Batterieblocks werden dann so miteinander verschaltet, dass beispielsweise eine maximale Gleichspannung von circa 50 V erreicht wird.

In besonders bevorzugter Weise zeichnet sich das erfindungsgemäße Batteriemodul durch das folgende zusätzliche Merkmal aus:
a. Das Modulgehäuse weist mindestens einen weiteren Anschlusskontakt zur Ankopplung von mindestens einer Kommunikationsleitung und/oder von mindestens einer Sicherheitsleitung auf.

Ein solcher weiterer Anschlusskontakt am Modulgehäuse bietet verschiedene Vorteile. Insbesondere kann über diesen oder gegebenenfalls mehrere weitere Anschlusskontakte am Modulgehäuse eine Datenübertragung erfolgen, die beispielsweise im Zusammenhang mit einem Batteriemanagementsystem erforderlich ist. Insbesondere im Falle einer Verschaltung mehrerer Batteriemodule kann eine Datenübertragung zwischen den Batteriemodulen und auch mit übergeordneten Einrichtungen erforderlich und sinnvoll sein. Der weitere Anschlusskontakt oder die weiteren Anschlusskontakte können daher beispielsweise als Daten-Steckverbinder ausgebildet sein.

Alternativ oder zusätzlich zu einem Datenübertragungskanal kann der mindestens eine weitere Anschlusskontakt genutzt werden, um eine Sicherheitsleitung (safety line) vorzusehen. Mittels einer solchen Sicherheitsleitung, die über alle Batteriemodule eines Batteriesystems und/oder durch alle Batterieblöcke eines Batteriemoduls durchgeschleift ist, kann das System bei einem Fehlerfall unterbrochen werden. Hiermit wird eine zusätzliche redundante Sicherheitsfunktion erreicht, so dass das System im Störfall abgeschaltet werden kann. Bei einem festgestellten Fehler bei einem Batterieblock oder einem Batteriemodul kann es jedoch auch zunächst vorgesehen sein, dass das Problem kommunikativ über die Software gelöst wird und dass nur bei einem gegebenenfalls weiterhin bestehenden Problem das System über die Sicherheitsleitung abgeschaltet wird.

Bevorzugt ist jedem Batterieblock des Batteriemoduls, vorzugsweise auch jedem einzelnen Energiespeicherelement der Batterieblöcke, ein Batteriemanagementsystem zugeordnet, wobei in einigen bevorzugten Ausführungsformen jedem Batterieblock ein eigenes Batteriemanagementsystem zugeordnet ist. Batteriemanagementsysteme werden im Allgemeinen eingesetzt, um den regulären Betrieb der Batterieblöcke und der Energiespeicherelemente zu steuern und/oder zu regeln. Dafür können die Batteriemodule und/oder gegebenenfalls die einzelnen Batterieblöcke und/oder die Energiespeicherelemente des erfindungsgemäßen Batteriemoduls mit elektronischen und/oder sensorischen Bauelementen ausgestattet sein, die eine Erfassung unterschiedlicher Parameter (Batterieladezustand, Temperatur, Zellspannungen, Zellströme und anderes) und gegebenenfalls eine Datenverarbeitung und/oder Datenweiterleitung ermöglichen. Durch die Überwachung derartiger Parameter kann der sichere Betrieb des erfindungsgemäßen Batteriemoduls gewährleistet werden, indem zum Beispiel eine Abschaltung bei Über- und Unterspannung, bei Über- oder Untertemperatur oder das Angleichen des Ladezustands einzelner Energiespeicherzellen in dem jeweiligen Batterieblock des Batteriemoduls erfolgt.

Das Batteriemanagementsystem kann in besonders vorteilhafter Weise mit der oben erläuterten Sicherheitsleitung kombiniert werden, wobei bevorzugt jedes Batteriemodul oder gegebenenfalls jeder Batterieblock über sein jeweiliges Batteriemanagementsystem die Sicherheitsleitung unterbrechen kann.

Weiterhin kann das erfindungsgemäße Batteriemodul im Zusammenhang mit einer Multilevel-Umrichter-Einrichtung eingesetzt werden. Dem liegt zugrunde, dass gattungsgemäße Batteriemodule bzw. Systeme aus solchen Batteriemodulen in der Regel als Gleichstromquelle wirken. Mithilfe eines Multilevel-Umrichters können solche Systeme auch an ein Wechselstromnetz angeschlossen werden. Bei solchen Umrichtern werden die Spannungen einzelner Batteriemodule oder allgemein einzelner Einheiten des Systems zeitversetzt für unterschiedlich lange Zeiträume addiert. Wenn die Spannungen der einzelnen Einheiten im Verhältnis zu deren Gesamtspannung ausreichend klein sind, lassen sich zum Beispiel sinusförmige Spannungsverläufe in guter Näherung erzeugen.

In der Regel wird eine Multilevel-Umrichter-Technologie von einer Vielzahl von Batteriemodulen gestützt. Bei den erfindungsgemäßen Batteriemodulen hingegen kann die Multilevel-Umrichter-Technologie direkt in ein Modulgehäuse eines erfindungsgemäßen Batteriemoduls integriert werden, um die einzelnen Batterieblöcke innerhalb des Batteriemoduls gemäß der Multilevel-Umrichter-Technologie zu betreiben. Hierdurch wird diese Technologie auch in kleineren Leistungsbereichen wirtschaftlich einsetzbar, beispielsweise im Zusammenhang mit einer sogenannten voll integrierten Wechselstrombatterie für multiple Anwendungen on-grid und off-grid, oder aber beispielsweise auch als "Reservekanister" für elektrisch betriebene Fahrzeuge.

Die Erfindung umfasst weiterhin ein modulares Batteriesystem, insbesondere ein modulares Hochvoltbatteriesystem, das sich durch die folgenden Merkmale auszeichnet:
a. Das Batteriesystem ist aus mindestens zwei Batteriemodulen gemäß der obigen Beschreibung aufgebaut;
b. über die positiven und negativen elektrischen Leistungsanschlusskontakte der Modulgehäuse sind mindestens zwei Batterieblöcke eines der Batteriemodule und/oder mindestens zwei Batterieblöcke aus unterschiedlichen Batteriemodulen elektrisch miteinander verschaltet.

Wie bereits im Zusammenhang mit den erfindungsgemäßen Batteriemodulen erläutert, erlaubt das Zusammenführen mehrerer Batteriemodule zu einem Batteriesystem eine Vielzahl möglicher Verschaltungen. Über die Leistungsanschlusskontakte können Batterieblöcke eines Batteriemoduls miteinander verschaltet werden, wobei hierbei durchaus auch Spannungen > 60 Volt gebildet werden können. Vor allem ist es aber möglich, hierzu Batterieblöcke aus zwei oder mehr verschiedenen Batteriemodulen miteinander zu verschalten. Hierbei können sowohl serielle als auch parallele Verschaltungen sowie Kombinationen von parallelen und seriellen Verschaltungen realisiert werden. Somit können Batteriesysteme sowohl für Niedervoltbereiche als auch für Hochvoltbereiche bereitgestellt werden.

Die einzelnen Batteriemodule des Batteriesystems können sehr flexibel als Bausteine genutzt werden, um die Bereitstellung von elektrischen Spannungen für unterschiedliche Anwendungsfelderzu erreichen. So kann beispielsweise ein System mit 48 V als Spannungsstandard bereitgestellt werden. Gleichfalls ist es möglich, ein modulares Batteriesystem im Hochvoltbereich zu realisieren, ohne dass es bei der Produktion, der Bereitstellung, dem Transport und der Montage vor der letztendlichen Aktivierung des Batteriesystems zu berührungsgefährlichen Spannungen kommen kann.

In besonders bevorzugter Weise zeichnet sich das erfindungsgemäße modulare Batteriesystem durch die folgenden zusätzlichen Merkmale aus:
a. Die Batteriemodule des Batteriesystems sind gestapelt; und
b. innerhalb des Stapels sind Seiten der Modulgehäuse benachbarter Batteriemodule, auf denen negative und/oder positive Leistungsanschlusskontakte angeordnet sind, einander zugewandt.

Für eine Stapelung der Batteriemodule ist es zweckmäßig, wenn die Gehäuse der Batteriemodule zueinander parallele Seiten aufweisen. Vorzugsweise sind daherdie Modulgehäuse prismatisch ausgestaltet und zeigen beispielsweise eine quaderförmige Form. Bei der Stapelung der Batteriemodule kann es vorgesehen sein, dass zwischen einzelnen Batteriemodulen Abstandshalter vorgesehen sind, so dass zwischen den Gehäusen der Batteriemodule Freiräume gebildet werden, die beispielsweise im Hinblick auf eine Kühlung vorteilhaft sein können. Weiterhin können solche Abstände auch im Hinblick auf die Verbindungstechnik zwischen den Leistungsanschlusskontakten der einzelnen Batteriemodule vorteilhaftsein.

Bevorzugt sind benachbarte Batteriemodule innerhalb des Stapels bzw. deren Batterieblöcke über die negativen und/oder positiven Leistungsanschlusskontakte auf den einanderzugewandten Seiten elektrisch miteinander verbunden.

In besonderer Weise zeichnet sich das erfindungsgemäße modulare Batteriesystem durch das folgende zusätzliche Merkmal aus:
a. Innerhalb des Stapels stehen die Leistungsanschlusskontakte benachbarter Batteriemodule in unmittelbarem Kontakt miteinander, wobei vorzugsweise die Leistungsanschlusskontakte direkt oder indirekt elektrisch miteinander verschaltet sind.

Der elektrische Kontakt zwischen den einzelnen Leistungsanschlusskontakten kann beispielsweise durch Steckverbindungen unter Verwendung von Buchsen- und Steckkontakten oder allgemein unter Verwendung von weiblichen und männlichen Anschlusskontakten realisiert sein. Gleichfalls sind auch andere Steckverbinder oder andere direkte oder direkte Verbinderkontakte möglich. Durch entsprechende Ausbildungder Kontakte kann dabei eine Verschaltung der einzelnen Batterieblöcke oder Verbünden von Batterieblöcken innerhalb eines Modulgehäuses eines Batteriemoduls und/oder eine Verschaltung von Batterieblöcken bzw. von Verbünden von Batterieblöcken, die sich in verschiedenen und insbesondere in benachbarten Batteriemodulen befinden, realisiert werden.

In diesem Zusammenhang kann das modulare Batteriesystem in einer ersten bevorzugten Ausführungsform mindestens eines der folgenden zusätzlichen Merkmale aufweisen:
a. die Batteriemodule umfassen jeweils eine erste Seite, auf der alle negativen Leistungsanschlusskontakte angeordnet sind, sowie eine zweite Seite, auf der alle positiven Leistungsanschlusskontakte angeordnet sind;
b. innerhalb des Stapels sind die Batteriemodule derart angeordnet, dass bei benachbarten Batteriemodulen die erste Seite eines der benachbarten Batteriemodule der zweiten Seite des anderen der benachbarten Batteriemodule zugewandt ist;
c. die Batterieblöcke der jeweiligen Batteriemodule sind zumindest teilweise parallel miteinander verschaltet.

Dabei sind vorzugsweise die Merkmale a. und b. und besonders bevorzugt die Merkmale a., b. und c., in Kombination miteinander verwirklicht. In Bezug auf weitere Details zu dieser Ausgestaltung des Batteriesystems bzw. der Batteriemodule wird auch auf die obige Beschreibung verwiesen.

In einer weiteren bevorzugten Ausführungsform des erfindungsgemäßen modularen Batteriesystems zeichnet sich das Batteriesystem durch mindestens eines der folgenden zusätzlichen Merkmale aus:
a. Die Batteriemodule umfassen jeweils eine erste Seite, auf der ein Teil der negativen Leistungsanschlusskontakte und ein Teil der positiven Leistungsanschlusskontakte angeordnet sind, sowie eine zweite Seite, auf der alle weiteren positiven Leistungsanschlusskontakte und alle weiteren negativen Leistungsanschlusskontakte angeordnet sind;
b. innerhalb des Stapels sind die Batteriemodule derart angeordnet, dass bei benachbarten Batteriemodulen die erste Seite eines der benachbarten Batteriemodule der zweiten Seite des anderen der benachbarten Batteriemodule zugewandt ist;
c. die Batterieblöcke der jeweiligen Batteriemodule sind mit Batterieblöcken eines jeweils benachbarten Batteriemoduls und/oder mit Batterieblöcken desselben Batteriemoduls zumindest teilweise seriell verschaltet.

Dabei sind die vorgenannten Merkmale a. und b. vorzugsweise gemeinsam miteinander verwirklicht. Besonders bevorzugt ist eine Kombination der vorgenannten Merkmale a., b. und c. In Bezug auf weitere Details zu dieser Ausgestaltung des Batteriesystems bzw. der Batteriemodule wird auch auf die obige Beschreibung verwiesen.

In einer ganz besonders bevorzugten Ausgestaltung des erfindungsgemäßen modularen Batteriesystems zeichnet sich das Batteriesystem durch das folgende zusätzliche Merkmal aus:
a. Das Batteriesystem weist mindestens einen Schalter zur Aktivierung und/oder Deaktivierung der Verschaltung der Batterieblöcke der das Batteriesystem bildenden Batteriemodule auf.

Durch einen Schalter zur Aktivierung und/oder Deaktivierung der Verschaltung der Batterieblöcke bzw. der Verbünde von Batterieblöcken derdas Batteriesystem bildenden Batteriemodule wird eine weitere Sicherheitsstufe realisiert, die das mögliche Auftreten von kritischen Berührungsspannungen während der Montage des Batteriesystems bis zu einem letzten Schritt der Aktivierung sicher vermeidet. Der Schalter zurAktivierung und/oder Deaktivierung kann im Prinzip in beliebiger Weise ausgestaltet sein, zum Beispiel in Form eines zusätzlichen Relais oder eines anderen Steckers, beispielsweise in Form eines sogenannten Service Plug, der eine letzte Brücke bei der Schaltung der Batterieblöcke schließt. Insbesondere können die Batteriemodule auch manuell bedienbare Schalter zur Aktivierung und/oder Deaktivierung der Verschaltung aufweisen. Die Ausgestaltung des Batteriesystems mit einem solchen Schalter ist in besonders vorteilhafter Weise für Hochvoltbatteriesysteme geeignet.

In einer weiteren bevorzugten Ausgestaltung des erfindungsgemäßen modularen Batteriesystems ist das System für eine Multilevel-Umrichter-Technologie eingerichtet. Die Multilevel-Umrichter-Technologie kann dabei in Bezug auf das gesamte System mit der Mehrzahl der Module oder gegebenenfalls auch auf der Ebene der einzelnen Module mit einer entsprechenden Ansteuerung der einzelnen Batterieblöcke, wie es oben bereits erläutert wurde, realisiert werden. Bezüglich weiterer Details zu diesem Aspekt der Erfindung wird daher auch auf die obige Beschreibung verwiesen.

Die Erfindung umfasst weiterhin ein Verfahren zur Montage eines Batteriesystems, insbesondere eines Hochvoltbatteriesystems, das die folgenden Verfahrensschritte umfasst:
es werden mindestens zwei Batteriemodule gemäß der obigen Beschreibung bereitgestellt; und
a. Die Batteriemodule werden zur Ausbildung eines Batteriesystems montiert; und
b. die Batterieblöcke der einzelnen Batteriemodule werden untereinander und/oder miteinander verschaltet.

Die Vorteile dieses Montageverfahrens ergeben sich daraus, dass bei den einzelnen Batteriemodulen des Systems keine kritischen Berührungsspannungen auftreten, wie oben erläutert. Die sich daraus ergebenden Vorteile in Bezug auf die Sicherheit insbesondere des Installateurs bzw. Monteurs und die sich daraus ergebenden Vorteile durch den möglichen Verzicht auf sicherheitstechnische Maßnahmen wurden bereits oben erläutert, so dass hierauf auch im Zusammenhang mit dem Verfahren Bezug genommen wird.

In einer besonders bevorzugten und vorteilhaften Ausgestaltung zeichnet sich das Verfahren durch den folgenden zusätzlichen Verfahrensschritt aus:
a. Es erfolgt eine abschließende Aktivierung der Verschaltung der Batterieblöcke durch Betätigung mindestens eines Schalters des Batteriesystems, wobei der mindestens eine Schalter zur Aktivierung und/oder Deaktivierung der Verschaltung der Batterieblöcke der das Batteriesystem bildenden Batteriemodule vorgesehen ist.

Aus dem Stand der Technik sind Verfahren bekannt, mit denen ein Batteriesystem für den Hochvoltbereich aus einzelnen Batteriemodulen aufgebautwerden kann. Hierbei werden beispielsweise Batteriemodule eingesetzt, die jeweils eine Spannung von 50 V liefern (Niederspannungsmodule). Durch Stapelung von acht derartigen Batteriemodulen und einer seriellen Verschaltung der Batteriemodule kann eine Hochspannung von 400V bereitgestellt werden. Da die Spannung der einzelnen Batteriemodule zu niedrig liegt, als dass eine kritische Berührungsspannung auftreten könnte, ist die Handhabung einzelner Module ungefährlich. Sobald zwei Module miteinander seriell verschaltet sind, besteht jedoch Gefahr. Gemäß der vorliegenden Erfindung wird dieses Problem durch die Aktivierung des mindestens einen Schalters gelöst.

Die erfindungsgemäßen Batteriemodule haben den Vorteil, dass die einzelnen Batteriemodule sowohl als Niederspannungsmodule als auch als Hochspannungsmodule einsetzbar sind. Diese universelle Einsetzbarkeit des gleichen Batteriemoduls ist wirtschaftlich sehr interessant, da weniger Varianten zur Abdeckung von Kundenanforderungen erforderlich sind. Die einzelnen Batteriemodule sind vor ihrer Installation als Niederspannungsmodule sicher zu handhaben, insbesondere im Hinblick auf die Fertigung, die Installation und auch das Recycling. Darüber hinaus liegt ein besonderer Vorteil der erfindungsgemäßen Batteriemodule darin, dass nur eine geringe Anzahl von Batteriemodulen für den Aufbau eines Hochvoltbatteriesystems erforderlich ist. Die Batteriemodule der Erfindung bieten eine hohe Flexibilität und Konfigurierbarkeit für verschiedene Anwendungen. So sind parallel und/oder seriell geschaltete Batterieblöcke oder Verbünde von Batterieblöcken innerhalb eines Batteriemoduls möglich und durch den Installateur von außen konfigurierbar.

Es ist sogar möglich, dass einzelne Batterieblöcke oder Verbünde von Zellblöcken innerhalb eines einzigen Batteriemoduls unabhängig voneinander betrieben werden. Dies kann beispielsweise für redundant ausgelegte Backup-Systeme benutzt werden. Die erfindungsgemäßen Batteriemodule können auch für kleine Systeme, beispielsweise für Niedervoltsysteme, verwendet werden. Allgemein vereint das System mit den erfindungsgemäßen Batteriemodulen die Vorteile eines herkömmlichen gestapelten Batteriesystems, wobei jedoch die Nachteile eines herkömmlichen Systems weitestgehend eliminiert sind.

Weitere Merkmale und Vorteile der Erfindung ergeben sich aus der nachfolgenden Beschreibung der Ausführungsbeispiele in Verbindung mit den Zeichnungen sowie aus den Ansprüchen. Hierbei können die einzelnen Merkmale jeweils für sich oder in Kombination miteinander verwirklicht sein.

### KURZBESCHREIBUNG DER ZEICHNUNGEN

In den Figuren zeigen schematisch:
- Fig. 1: Darstellung eines erfindungsgemäßen Batteriemoduls mit zwei Batterieblöcken;
- Fig. 2: Weitere Darstellung eines erfindungsgemäßen Batteriemoduls;
- Fig. 3: Darstellung einer möglichen Verschaltung der Leistungsanschlusskontakte des Batteriemoduls in der Ausführungsform gemäß Fig. 2;
- Fig. 4: Weitere Darstellung eines erfindungsgemäßen Batteriemoduls;
- Fig. 5: Darstellung einer möglichen Verschaltung der Leistungsanschlusskontakte des Batteriemoduls in der Ausführungsform gemäß Fig. 4;
- Fig. 6: Darstellung einer Ausgestaltungsmöglichkeit der Leistungsanschlusskontakte des Batteriemoduls in einer Ausführungsform gemäß Fig. 4;
- Fig. 7: Darstellung des Aufbaus eines erfindungsgemäßen modularen Batteriesystems;
- Fig. 8: Darstellung des Aufbaus eines erfindungsgemäßen modularen Batteriesystems mit Sicherheitsleitung; und
- Fig. 9: Vergleich des Aufbaus von erfindungsgemäßen modularen Batteriesystemen (B, C) mit einem herkömmlichen modularen Batteriesystem (A).

### DETAILLIERTE BESCHREIBUNG DER AUSFÜHRUNGSBEISPIELE

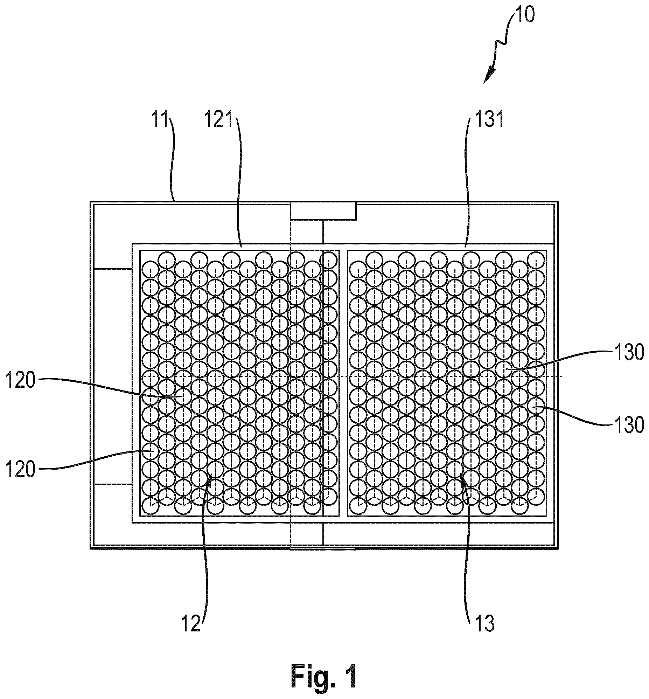

**Fig. 1** zeigt einen Querschnitt durch eine Ausführungsform eines erfindungsgemäßen Batteriemoduls 10. Innerhalb eines quaderförmigen Modulgehäuses 11 sind zwei Batterieblöcke 12 und 13 angeordnet. Beide Batterieblöcke umfassen jeweils eine Vielzahl von einzelnen Energiespeicherelementen 120 bzw. 130. Bei den Energiespeicherelementen 120, 130 handelt es sich in diesem Ausführungsbeispiel um zylindrische Rundzellen auf Lithium-Ionen-Basis. Hierbei sind jeweils vierzehn Rundzellen 120 bzw.130 in einer Reihe angeordnet, wobei ein Batterieblock insgesamt zwölf solcher Reihen umfasst. Die zylindrischen Rundzellen 120, 130 sind parallel zueinander in einem regelmäßigen Muster in platzsparender Weise angeordnet. Diese Anordnung wird jeweils von einem Zellhalter 121 bzw. 131 gehalten, wobei diese Zellhalter 121, 131 eine Einrahmung derzylindrischen Rundzellen 120, 130 bewirken. Zweckmäßigerweise sind die Zellhalter 121, 131 aus einem Kunststoffmaterial gefertigt, so dass sie gleichzeitig eine Isolierung der beiden Zellblöcke 12 und 13 voneinander bewirken. Die einzelnen Energiespeicherelemente 120,130 sind innerhalb der jeweiligen Zellblöcke 12 bzw. 13 parallel und/oder seriell miteinander verschaltet. Die beiden Zellblöcke 12 und 13 selbst sind jedoch nicht miteinander verschaltet. Die jeweiligen Pluspole 12a und 13a und Minus-Pole 12b und 13b der Zellblöcke 12 und 13 werden über separate elektrische Leiter zu den Leistungsanschlusskontakten 125, 126, 135 und 136 geführt. Die Zellblöcke 12 und 13 liefern jeweils eine Gleichspannung von 60V. Allein durch versehentliches gleichzeitiges Berühren von zwei der vier Leistungsanschlusskontakte kann somit keine berührungsgefährliche Spannung abgegriffen werden.

Verbindet man allerdings die Leistungsanschlusskontakte 125 und 136 durch einen geeigneten elektrischen Leiter (serielle Verschaltung), so ist an den Leistungsanschlusskontakten 126 und 135 eine berührungsgefährliche Spannung von 120 V abgreifbar. Analoges gilt im Fall eines elektrischen Verbindens der Leistungsanschlusskontakte 126 und 135, dadurch ist an den Leistungsanschlusskontakten 125 und 136 eine Spannung von 120 V abgreifbar.

Jeder der Zellblöcke 12, 13 kann über ein eigenes, hier nicht näher dargestelltes Batteriemanagementsystem verfügen.

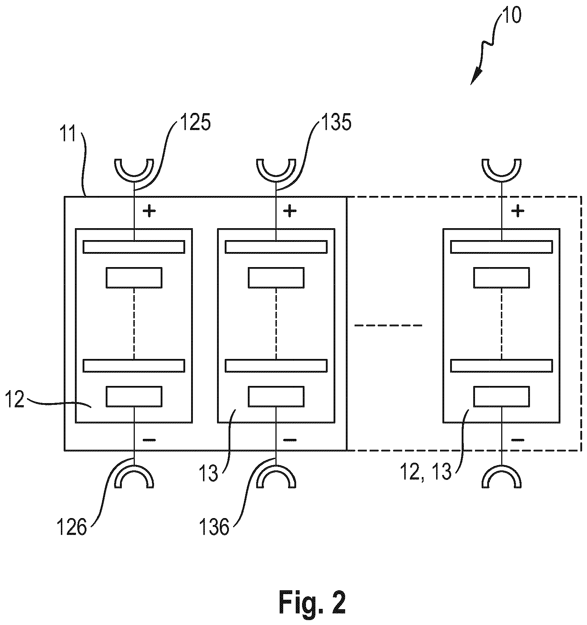

**Fig. 2** zeigt eine Variante eines erfindungsgemäßen Batteriemoduls 10, bei dem zwei Batterieblöcke 12 und 13 oder gegebenenfalls weitere Zellblöcke innerhalb des Modulgehäuses 11 angeordnet sind. Die weiteren möglichen Zellblöcke sind durch den gestrichelten Anteil des Modulgehäuses angedeutet. Weiterhin gezeigt sind die positiven Leistungsanschlusskontakte 125 und 135 und die negativen Leistungsanschlusskontakte 126 und 136 der Batterieblöcke 12 bzw. 13, die sich in diesem Ausführungsbeispiel auf gegenüberliegenden Seiten des Modulgehäuses 11 befinden. Somit können die Zellblöcke 12 und 13 im Prinzip beliebig verschaltet werden. Sie können dabei miteinander oder mit Batterieblöcken anderer Batteriemodule verschaltet werden oder auch mit externen Quellen oder Senken, gegebenenfalls auch unabhängig voneinander.

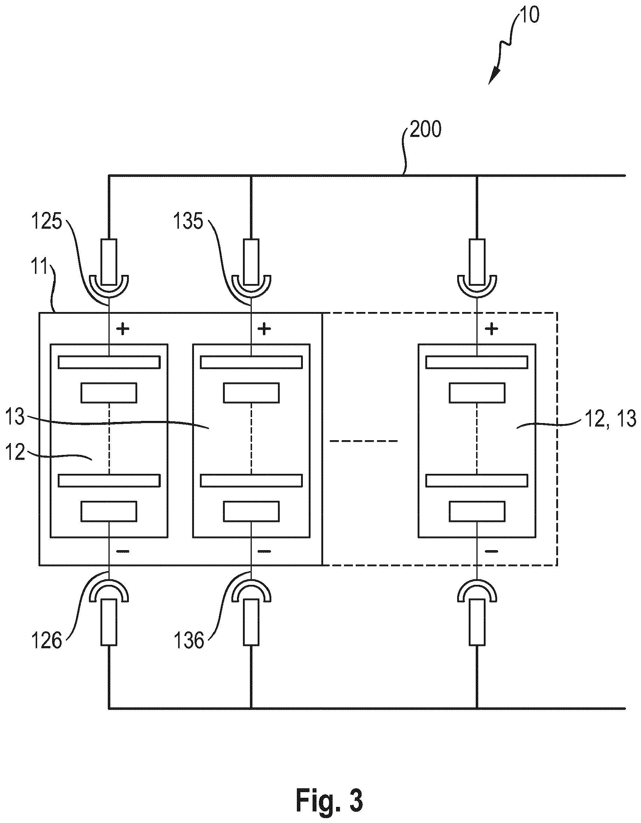

**Fig. 3** zeigt eine mögliche Verschaltung 200 der Batterieblöcke 12, 13 des Batteriemoduls 10 in der Ausführungsform gemäß Fig. 2. Hierbei werden die Batterieblöcke 12, 13 über Leistungsanschlusskontakte 125, 126, 135, 136 parallel miteinander verschaltet. Prinzipiell ist bei dieser Ausführungsform des Batteriemoduls auch eine Reihenschaltung bzw. eine serielle Verschaltung möglich, mit der höhere Spannungen erreicht werden können. Hierbei wäre allerdings die Verbindungstechnik etwas aufwendiger.

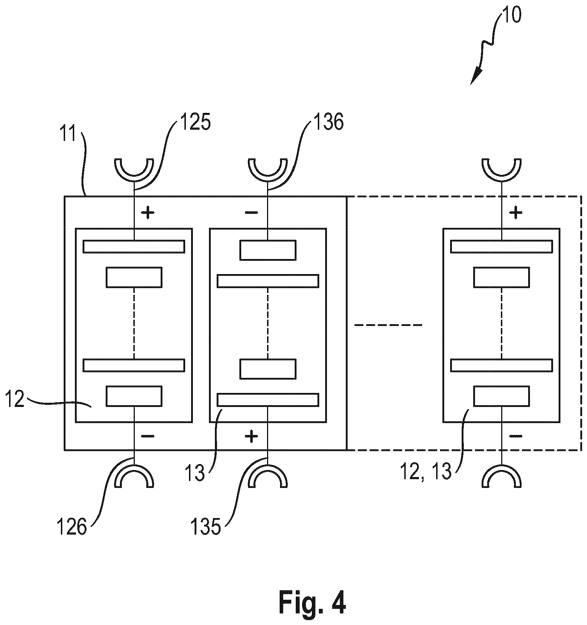

**Fig. 4** zeigt eine weitere mögliche Ausführungsform eines erfindungsgemäßen Batteriemoduls 10 mit zwei oder gegebenenfalls mehr Batterieblöcken 12, 13. In dieser Ausgestaltung sind die Zellblöcke 12 und 13 abwechselnd gepolt, so dass sich auf einer Seite des Modulgehäuses 11 ein positiver Leistungsanschlusskontakt 125 des ersten Batterieblocks 12 und ein negativer Leistungsanschlusskontakt 136 des benachbarten Batterieblocks 13 befinden. Entsprechend befinden sich auf der gegenüberliegenden Seite des Modulgehäuses ebenfalls ein negativer Leistungsanschlusskontakt 126 des Batterieblocks 12 und ein positiver Leistungsanschlusskontakt 135 des benachbarten Batterieblocks 13. Bei mehr als zwei Blöcken sind die positiven und negativen Leistungsanschlusskontakte auf den beiden Seiten in alternierender Abfolge angeordnet. Mit dieserAusführungsform des erfindungsgemäßen Batteriemoduls ist eine Reihenschaltung bzw. eine serielle Schaltung besonders leicht und praktikabel umsetzbar.

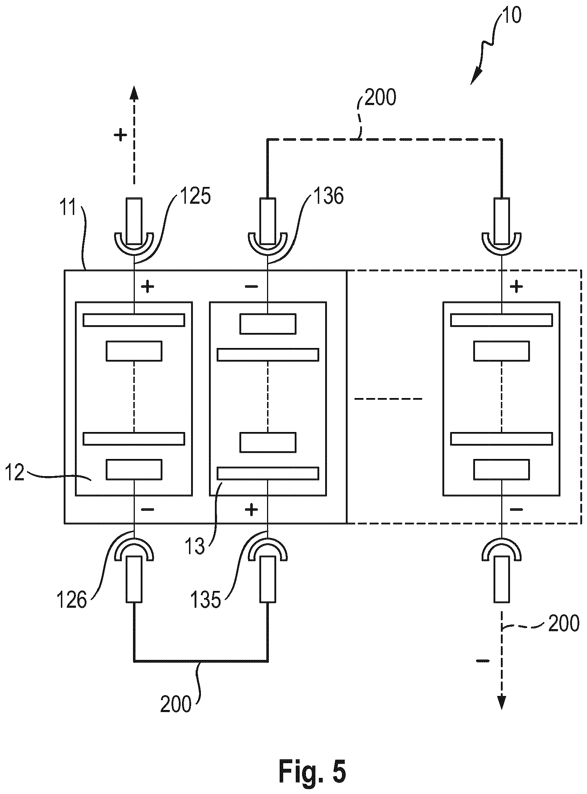

**Fig. 5** illustriert eine serielle Verschaltung 200 bei der Ausführungsform des Batteriemoduls 10 aus Fig. 4. Für die Verschaltung 200 können beispielsweise übliche Kurzschlussstecker (*Service Plugs*) oder andere interne oder externe Schalter oder Kontaktklingen verwendet werden.

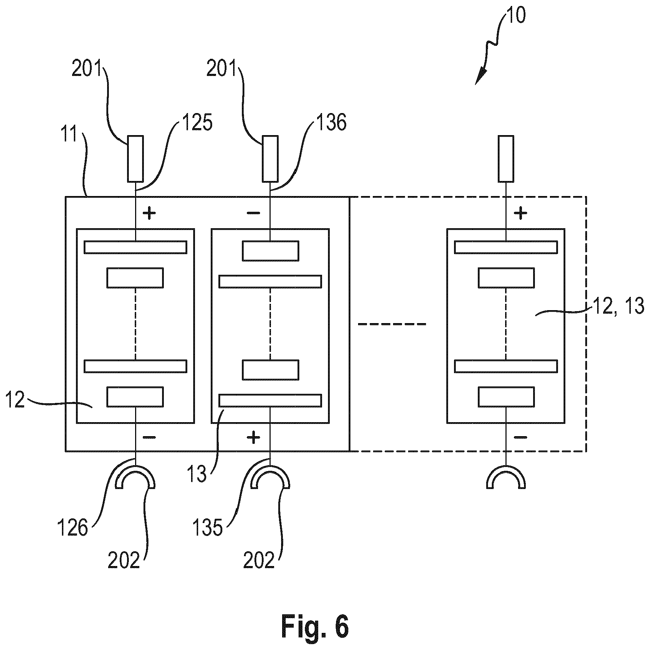

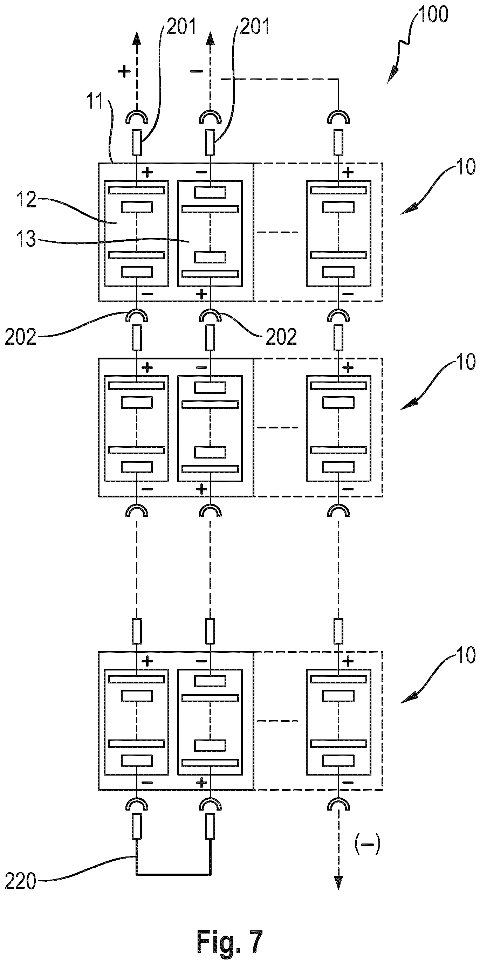

**Fig. 6** zeigt eine bevorzugte Ausführungsform eines Batteriemoduls 10, dessen Batterieblöcke 12, 13 (vergleichbar mit der Ausführungsform in den Fig. 4 und 5) mit entgegengesetzter Polarität ausgerichtet sind. In dieser Variante sind die positiven und negativen Anschlusskontakte 125 und 136 auf der einen Seite des Modulgehäuses 11 als männliche Steckkontakte 201 und die negativen und positiven Leistungsanschlusskontakte 126 und 135 aufdergegenüberliegenden Seite des Modulgehäuses 11 als weibliche Kontakte 202 ausgestaltet. Stapelt man zwei Batteriemodule dieser Bauart aufeinander, so ist eine serielle Verschaltung von Batterieblöcken 12, 13 der unterschiedlichen Batteriemodule problemlos möglich, wie es in Fig. 7 illustriert ist.

**Fig. 7** illustriert ein modulares Batteriesystem 100 gemäß der Erfindung, wobei die einzelnen Batteriemodule 10 in der Ausführungsform gemäß Fig. 6 gestapelt aufeinanderliegen. Das Batteriesystem 100 kann beispielsweise mit zwei oder mehr Batteriemodulen 10 aufgebaut werden. Beim Stapeln der Batteriemodule 10 wird eine Serienschaltung von im Stapel übereinander angeordneten Batterieblöcke 12 und 13 verschiedener Batteriemodule gebildet. Die weiblichen Kontakte 202 des jeweils oben liegenden Moduls kontaktieren dabei die Steckkontakte 201 des darunter angeordneten Batteriemoduls. Selbstverständlich können die weiblichen Kontakte 202 und die männlichen Kontakte 201 auch jeweils vertauscht angeordnet sein. Darüber hinaus sind auch andere Kontaktiereinrichtungen, wie beispielsweise Kontaktflächen und/oder Kontaktfedern oderÄhnliches, möglich.

Ein besonderer Vorteil der Erfindung liegt dabei darin, dass jedes Batteriemodul 10 mehrere voneinander unabhängige, variabel verschaltbare Zellblöcke 12, 13 enthält. Somit kann die Anzahl der Batteriemodule, die für die Erreichung einer gewissen Stapelspannung des gesamten modularen Batteriesystems 100 erforderlich ist, deutlich reduziert werden.

Zur Realisierung eines Schalters zur finalen Aktivierung der Reihenschaltung eignet sich beispielsweise das Verbindungsstück 220. Das Verbindungsstück 220 kann beispielsweise als zusätzlicher Schalter, Stecker, Relais oder Ähnliches ausgebildet sein, um diese Brücke als letztes zu schließen, sodass erst nach erfolgter Montage und Verschaltung der einzelnen Batteriemodule 10 die Reihenschaltung geschlossen und das Hochvoltsystem 100 damit final freigegeben wird.

Neben den Leistungsanschlusskontakten sind vorteilhafterweise bei den einzelnen Batteriemodulen noch weitere Kontaktmöglichkeiten vorgesehen, insbesondere hier nicht näher dargestellte weitere Anschlusskontakte zur Verschattung von Daten- und/oder Kommunikationsleitungen und/oder von einer oder gegebenenfalls mehreren Sicherheitsleitungen. Hierfür können ein zusätzlicher modularer Stecker oder gegebenenfalls mehrere zusätzliche modulare Stecker bei jedem Batteriemodul 10 vorgesehen sein, über den verschiedene weitere Kontakte und Anschlüsse möglich sind.

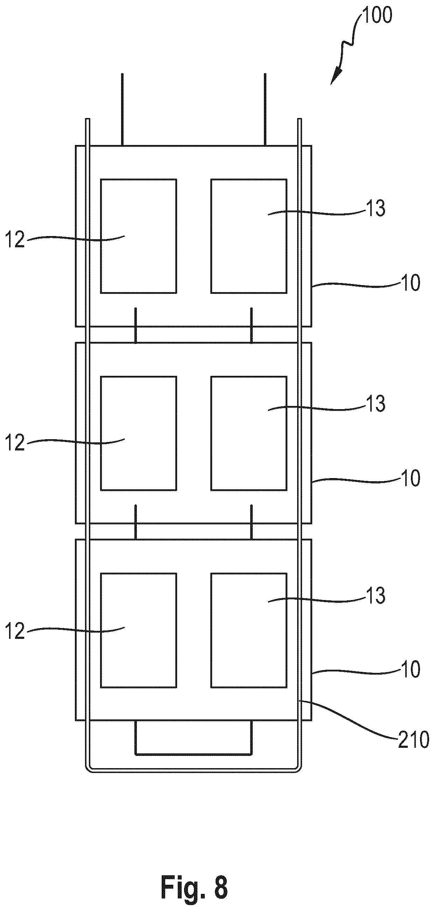

**Fig. 8** zeigt eine weitere Ausgestaltungsmöglichkeit eines modularen Batteriesystems 100, das in diesem Ausführungsbeispiel von drei Batteriemodulen 10 mit jeweils zwei Batterieblöcken 12, 13 aufgebaut ist. Die drei Batteriemodule 10 liegen gestapelt aufeinander und die Batterieblöcke 12, 13 der drei Batteriemodule 10 sind insgesamt seriell miteinander verschaltet. Auf diese Weise kann mit drei Batteriemodulen mit jeweils zwei Batterieblöcken, die jeweils nicht mehr als eine Gleichspannung von 50 V bereitstellen, ein modulares Batteriesystem mit einer nominalen Spannung von über 300 V bereitgestellt werden.

In dieser Ausführungsform ist zusätzlich eine Sicherheitsleitung 210 vorgesehen, die durch alle Batteriemodule 10 durchgeschleift ist, wobei jeder der Batterieblöcke 12, 13 auf die Sicherheitsleitung 210 zugreifen kann. Sofern eine Störung in einem der Batterieblöcke 12, 13 auftritt, kann die Sicherheitsleitung 210 direkt unterbrochen werden, so dass das Batteriesystem 100 im Störungsfall sofort abgeschaltet werden kann.

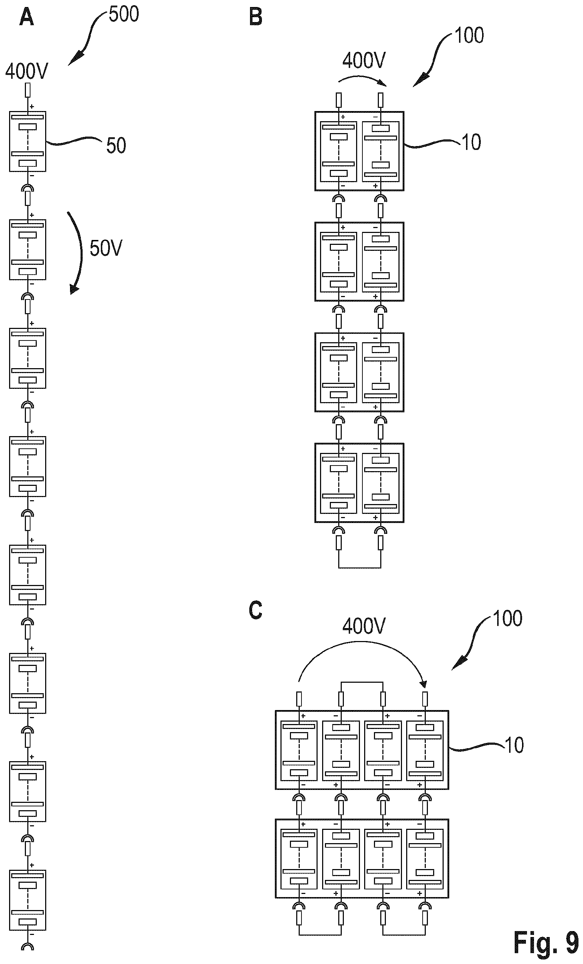

**Fig. 9** illustriert die besonderen Vorteile eines erfindungsgemäßen modularen Batteriesystems 100, wie es in den Teilfiguren B oder C dargestellt ist, gegenüber einem herkömmlichen modularen Batteriesystem 500, wie es in der Teilfigur A gezeigt ist. Die einzelnen Batteriemodule 10, die die erfindungsgemäßen Batteriemodule repräsentieren, und die herkömmlichen Batteriemodule 50 weisen jeweils keine berührungsgefährlichen Spannungen auf (z.B. maximal 50 Volt) und können als Niedervoltbatteriemodule bezeichnet werden. Die erfindungsgemäßen modularen Batteriesysteme 100 sind dabei mit wesentlich weniger einzelnen Batteriemodulen 10 aufgebaut und stellen gleichzeitig eine vergleichbar hohe Spannung wie ein herkömmliches modulares Batteriesystem 500 (beispielsweise 400 V) bereit. Bei einem herkömmlichen modularen Hochvoltbatteriesystem 500 sind beispielsweise acht einzelne Batteriemodule 50 erforderlich, die jeweils beispielsweise 50 V Gleichspannung bereitstellen und die in Reihe geschaltet sind. Bei einem erfindungsgemäßen modularen Batteriesystem 100 sind zur Erreichung der gleichen Spannung von 400 V in dem in Fig. B gezeigten Ausführungsbeispiel lediglich viererfindungsgemäße Batteriemodule 10 erforderlich. Jedes der Batteriemodule 10 umfasst in diesem Ausführungsbeispiel zwei Batterieblöcke, die jeweils eine von außen abgreifbare Spannung von maximal 50 V aufweisen. Durch eine Reihenschaltung der einzelnen Batterieblöcke der Batteriemodule 10 miteinander wird die Gesamtspannung von 400 V bei Halbierung der Anzahl der Module möglich. In dem in der Teilfigur C gezeigten Ausführungsbeispiel des erfindungsgemäßen modularen Batteriesystems 100 sind lediglich zwei Batteriemodule 10 zur Erreichung der Gesamtspannung von 400 V erforderlich. Jedes dieser Batteriemodule 10 umfasst vier Batterieblöcke mit jeweils einer von außen abgreifbaren Spannung von 50 V, die insgesamt in Reihe geschaltet sind.

Prinzipiell können beliebig viele voneinander unabhängige Zellblöcke in ein Batteriemodul integriert werden. Im Allgemeinen sind Zweierpotenzen, beispielsweise zwei, vier oder acht, bevorzugt. Selbstverständlich sind aber auch ungerade Anzahlen, wie beispielsweise drei, fünf oder elf Batterieblöcke pro Batteriemodul möglich.

Neben Hochspannungsanwendungen sind auch Niedervoltanwendungen der erfindungsgemäßen Batteriemodule möglich, mit denen beispielsweise verschiedene Spannungsstandards realisiert werden können, beispielsweise 48 V.

## Patentansprüche

1. Batteriemodul (10) mit den folgenden Merkmalen:
a. Das Batteriemodul (10) weist ein Modulgehäuse (11) auf; und
b. innerhalb des Modulgehäuses (11) sind mindestens zwei Batterieblöcke (12, 13) angeordnet; und
c. die Batterieblöcke (12, 13) umfassen jeweils mindestens ein, vorzugsweise mindestens zwei Energiespeicherelemente (120, 130) mit jeweils mindestens einer positiven Elektrode und mindestens einer negativen Elektrode; und
d. die mindestens zwei Energiespeicherelemente (120, 130) eines Batterieblocks (12, 13) sind seriell und/oder parallel miteinander verschaltet;
wobei das Batteriemodul (10) durch die folgenden zusätzlichen Merkmale gekennzeichnet ist:
e. Jeder der Batterieblöcke (12, 13) liefert maximal 60 Volt Gleichspannung; und
f. das Modulgehäuse (11) weist mindestens zwei positive Leistungsanschlusskontakte (125, 135) und mindestens zwei negative Leistungsanschlusskontakte (126, 136) auf, die den Batterieblöcken (12, 13) zugeordnet sind, damit die von den Batterieblöcken (12, 13) gelieferten Gleichspannungen von außerhalb des Modulgehäuses (11) abgreifbar sind; und
g. die zwischen einem positiven und einem negativen Leistungsanschlusskontakt abgreifbare Gleichspannung beträgt maximal 60 Volt.

2. Batteriemodul nach Anspruch 1 mit mindestens einem der folgenden zusätzlichen Merkmale:
a. Das Modulgehäuse (11) ist prismatisch ausgebildet;
b. die elektrischen Leistungsanschlusskontakte (125, 135, 126, 136) des Modulgehäuses (11) befinden sich auf mindestens zwei Seiten des Modulgehäuses, insbesondere auf gegenüberliegenden Seiten des Modulgehäuses;
c. je Batterieblock (12, 13) weist das Modulgehäuse (11) einen positiven (125, 135) und einen negativen elektrischen Leistungsanschlusskontakt (126, 136) auf, von denen sich einer auf einer der Seiten und der andere auf einer anderen der Seiten des Modulgehäuses (11), insbesondere auf gegenüberliegenden Seiten des Modulgehäuses, befindet.

3. Batteriemodul nach Anspruch 1 oder Anspruch 2 mit dem folgenden zusätzlichen Merkmal:
a. Das Modulgehäuse (11) umfasst eine Seite, auf der alle negativen Leistungsanschlusskontakte (126, 136) angeordnet sind, sowie eine weitere Seite, auf der alle positiven Leistungsanschlusskontakte (125, 135) angeordnet sind.

4. Batteriemodul nach Anspruch 1 oder Anspruch 2 mit dem folgenden zusätzlichen Merkmal:
a. Das Modulgehäuse (11) umfasst eine Seite, auf der ein Teil der negativen Leistungsanschlusskontakte (126) und ein Teil der positiven Leistungsanschlusskontakte (135) angeordnet sind, sowie eine weitere Seite, auf der alle weiteren positiven Leistungsanschlusskontakte (125) und alle weiteren negativen Leistungsanschlusskontakte (136) angeordnet sind, wobei vorzugsweise die positiven und die negativen Leistungsanschlusskontakte auf den Seiten in einer alternierenden Abfolge angeordnet sind.

5. Batteriemodul nach Anspruch 3 oder Anspruch 4 mit dem folgenden zusätzlichen Merkmal:
a. Die elektrischen Leistungsanschlusskontakte (125, 136) auf der einen Seite des Modulgehäuses (11) sind als männlicher Teil (201) und die elektrischen Leistungsanschlusskontakte auf der anderen Seite (126, 135), insbesondere auf der gegenüberliegenden Seite, des Modulgehäuses (11) sind als weiblicher Teil (202) einer Steckverbindung ausgebildet.

6. Batteriemodul nach einem der vorhergehenden Ansprüche mit mindestens einem der folgenden zusätzlichen Merkmale:
a. Die Energiespeicherelemente (120, 130) eines Batterieblocks (12, 13) sind zylindrische Rundzellen;
b. die Energiespeicherelemente (120, 130) eines Batterieblocks (12, 13) werden von einer Halterung (121, 131), insbesondere einer Halterung aus Kunststoff, gehalten.

7. Batteriemodul nach einem der vorhergehenden Ansprüche mit dem folgenden zusätzlichen Merkmal:
a. Das Modulgehäuse (11) weist mindestens einen weiteren Anschlusskontakt zur Ankopplung von mindestens einer Kommunikationsleitung und/oder von mindestens einer Sicherheitsleitung (210) auf.

8. Modulares Batteriesystem (100), insbesondere modulares Hochvoltbatteriesystem, mit den folgenden Merkmalen:
a. Das Batteriesystem ist aus mindestens zwei Batteriemodulen (12, 13) gemäß einem der Ansprüche 1 bis 7 aufgebaut; und
b. über die positiven und negativen elektrischen Leistungsanschlusskontakte (125, 135,126,136) ihrer Modulgehäuse (11) sind mindestens zwei Batterieblöcke (12, 13) eines der Batteriemodule (10) und/oder mindestens zwei Batterieblöcke (12, 13) aus unterschiedlichen Batteriemodulen (10) des Batteriesystems elektrisch miteinander verschaltet.

9. Modulares Batteriesystem nach Anspruch 8 mit den folgenden zusätzlichen Merkmalen:
a. Die Batteriemodule (10) des Batteriesystems (100) sind gestapelt; und
b. innerhalb des Stapels sind Seiten der Modulgehäuse benachbarter Batteriemodule (10), auf denen negative und/oder positive Leistungsanschlusskontakte (126, 136, 125, 135) angeordnet sind, einander zugewandt.

10. Modulares Batteriesystem nach Anspruch 9 mit dem folgenden zusätzlichen Merkmal:
a. Innerhalb des Stapels stehen die Leistungsanschlusskontakte (125, 135, 126, 136) benachbarter Batteriemodule (10) in unmittelbarem Kontakt miteinander, wobei vorzugsweise die Leistungsanschlusskontakte direkt oder indirekt miteinander verschaltet sind.

11. Modulare Batteriesystem nach Anspruch 9 oder Anspruch 10 mit mindestens einem derfolgenden zusätzlichen Merkmale:
a. Die Batteriemodule (10) umfassen jeweils eine erste Seite, auf der alle negativen Leistungsanschlusskontakte (126, 136) angeordnet sind, sowie eine zweite Seite, auf der alle positiven Leistungsanschlusskontakte (125, 135) angeordnet sind;
b. innerhalb des Stapels sind die Batteriemodule (10) derart angeordnet, dass bei benachbarten Batteriemodulen (10) die erste Seite eines der benachbarten Batteriemodule der zweiten Seite des anderen der benachbarten Batteriemodule zugewandt ist;
c. die Batterieblöcke (12, 13) der jeweiligen Batteriemodule (10) sind zumindest teilweise parallel miteinanderverschaltet.

12. Modulares Batteriesystem nach Anspruch 9 oder Anspruch 10 mit mindestens einem der folgenden zusätzlichen Merkmale:
a. Die Batteriemodule umfassen jeweils eine erste Seite, auf der ein Teil der negativen Leistungsanschlusskontakte (126) und ein Teil der positiven Leistungsanschlusskontakte (135) angeordnet sind, sowie eine zweite Seite, auf der alle weiteren positiven Leistungsanschlusskontakte (125) und alle weiteren negativen Leistungsanschlusskontakte (136) angeordnet sind;
b. innerhalb des Stapels sind die Batteriemodule (10) derart angeordnet, dass bei benachbarten Batteriemodulen die erste Seite eines der benachbarten Batteriemodule der zweiten Seite des anderen der benachbarten Batteriemodule zugewandt ist;
c. die Batterieblöcke (12, 13) derjeweiligen Batteriemodule (10) sind mit Batterieblöcken eines jeweils benachbarten Batteriemoduls und/oder mit Batterieblöcken desselben Batteriemoduls zumindest teilweise seriell verschaltet.

13. Modulares Batteriesystem nach einem der Ansprüche 8 bis 12 mit dem folgenden zusätzlichen Merkmal:
a. Das Batteriesystem (100) weist mindestens einen Schalter (220) zur Aktivierung und/oder Deaktivierung der Verschaltung der Batterieblöcke (12, 13) der das Batteriesystem (100) bildenden Batteriemodule (10) auf.

14. Verfahren zur Montage eines Batteriesystems (100), insbesondere eines Hochvoltbatteriesystems, mit den folgenden Verfahrensschritten:
a. Es werden mindestens zwei Batteriemodule (10) gemäß einem der Ansprüche 1 bis 7 bereitgestellt; und
b. die Batteriemodule werden zur Ausbildung eines Batteriesystems (100) montiert; und
c. die Batterieblöcke (12, 13) der einzelnen Batteriemodule (10) werden untereinander und/oder miteinander elektrisch verschaltet.

15. Verfahren nach Anspruch 14 mit dem folgenden zusätzlichen Verfahrensschritt:
a. Es erfolgt eine abschließende Aktivierung der Verschaltungder Batterieblöcke durch Betätigung eines Schalters (220) des Batteriesystem.
